# EUROPÄISCHE PATENTANMELDUNG

(11) **EP 1 814 363 A2**
(43) Veröffentlichungstag der Anmeldung: **01.08.2007**
(21) Anmeldenummer: 07090006.3
(22) Anmeldetag: 23.01.2007
(51) Int. Cl.: H05B 3/82

(54) **Elektrisches Heizelement für Heizkörper**

(30) Priorität: 30.01.2006 DE 202006001639 U
(71) Anmelder: Arbonia AG, 9320 Arbon (CH); KERMI GmbH, 94447 Plattling (DE)
(72) Erfinder: Danilo, Cenci, 9320 Arbon (CH)
(74) Vertreter: Patentanwälte Bressel und Partner

(57) **Zusammenfassung**

Die Erfindung betrifft ein elektrisches Heizelement, insbesondere zum Aufheizen eines flüssigen Heizmediums (6) in einem Heizkörper (5), mit einem Heizstab (4), mindestens einem Temperaturfühler (1) und einer Sicherung (7), wobei als Temperaturfühler (1) ein NTC-Element vorgesehen ist, welches über eine mit der Innenseitenfläche des Heizstabes (4) verbunde wärmeleitende Brücke (3) eine vom Füllzustand des Heizkörpers (5) abhängige Temperaturveränderung erfährt.

## Beschreibung

Die Erfindung betrifft ein elektrisches Heizelement, insbesondere zum Aufheizen eines flüssigen Heizmediums in einem Heizkörper. Das Heizelement verfügt dabei über mindestens einen, die Temperatur des Heizkörpers erfassenden Temperaturfühler und eine Einrichtung zur Trockenlauferkennung.

Elektrische Heizelemente für Heizkörper bzw. Heizkörper mit elektrischen Heizstäben sind hinlänglich bekannt und dienen beispielsweise dazu in einem Bad eine Trocknungsmöglichkeit z.B. für Handtücher und/oder eine zusätzliche Heizmöglichkeit insbesondere in der Übergangszeit zu schaffen, in der die Zentralheizung noch nicht verwendet werden soll. Die Heizkörper sind meist zusätzlich an eine Zentralheizanlage anschließbar. Ein Heizkörper mit einem derartigen elektrischen Heizelement wird beispielsweise in der DE 8310463 U1 beschrieben. Dem mit einem Heizfühler versehenen elektrischen Heizstab wird von außen über ein Kabel mit Strom versorgt. Bei Erwärmung des Heizmediums durch den elektrisch betriebenen Heizstab zirkuliert dieses durch den Heizkörper. Angaben zur Schaltung des elektrischen Heizstabes, insbesondere bei Störfällen, wie beispielsweise Trockenlauf sind dieser Druckschrift nicht zu entnehmen.

Wenn das durch das elektrische Heizelement erwärmte Heizmedium im Heizkörper zirkuliert, stellen sich im störungsfreien Fall stationäre Temperaturbedingungen ein; das Heizelement heizt das flüssige Heizmedium und durch das am Heizelement vorbeiströmende Heizmedium wird die Wärme vom Heizelement abgeführt. Bei Erreichen einer eingestellten Temperatur, die über einen im Heizelement angeordneten Temperaturfühler gemessen wird, beginnt der Regelprozess, ohne dass dabei die Heizwendel des Heizstabes eine Temperatur erreicht, die das Auslösen einer im Heizstab angeordneten Sicherung (Schmelzsicherung) bewirkt. Bei Verringerung der Flüssigkeitsmenge oder Ausfall der Strömung wird die vom Heizelement abgegebene Wärme nur noch teilweise oder gar nicht mehr abgeführt. Durch die fehlende Wärmeleitung über das Heizmedium steigt die Temperatur am Temperaturfühler zeitverzögert und sehr langsam an, so dass noch vor dem Erreichen der Regeltemperatur die Heizwendel eine Temperatur erreicht, die ein Auslösen der Sicherung bewirkt, wobei der Heizstab zerstört wird und meist ausgewechselt werden muss.

Die Aufgabe der Erfindung besteht deshalb darin, ein elektrisches Heizelement für einen Heizkörper zu entwickeln, welches den Füllzustand des Heizkörpers erkennt und bei Störfällen die Aufheizung der Heizwendel unterbricht.

Erfindungsgemäß wird diese Aufgabe durch die Merkmale des Anspruchs 1 gelöst. Vorteilhafte Ausgestaltungen der Erfindung sind in den zugehörigen Ansprüchen enthalten.

Demnach umfasst die Erfindung ein elektrische Heizelement zum Aufheizen eines flüssigen Heizmediums in einem Heizkörper mit einem Heizstab, mindestens einen Temperaturfühler und einer Sicherung, wobei als Temperaturfühler ein NTC-Element (Heißleiter) vorgesehen ist, welches über eine mit der Innenseitenfläche des Heizstabes verbunde wärmeleitende Brücke eine vom Füllzustand des Heizkörpers abhängige Termperaturveränderung über den zeitlichen Verlauf der Aufheizphase erfährt. Vorteilhaft ist der Temperaturfühler dabei mit der Brücke formschlüssig und somit optimal wärmeleitend mit der Innenseitenfläche des Heizstabes verbunden. Die Sicherung ist vorzugsweise als Schmelzsicherung ausgebildet. Durch die wärmeleitende Brücke erfährt das NTC-Element im Störfall bei Flüssigkeitsverlust zeitversetzt eine ähnlich starke Erwärmung wie der Heizstab selbst. Die Steigung des Temperaturverlaufs am NTC-Element lässt einen Schluss auf den Füllzustand des Heizkörpers zu und ermöglicht es , den Heizvorgang vor dem Erreichen der Auslösetemperatur der Sicherung abzubrechen. Durch die Trockenlauferkennung, wird ein zerstörungsfreier Überhitzungsschutz für in Heizkörpern eingesetzte elektrische Heizelemente zur Verfügung gestellt.

Nachfolgend wird die Erfindung in einem Ausführungsbeispiel näher erläutert. In der Zeichnung zeigen:

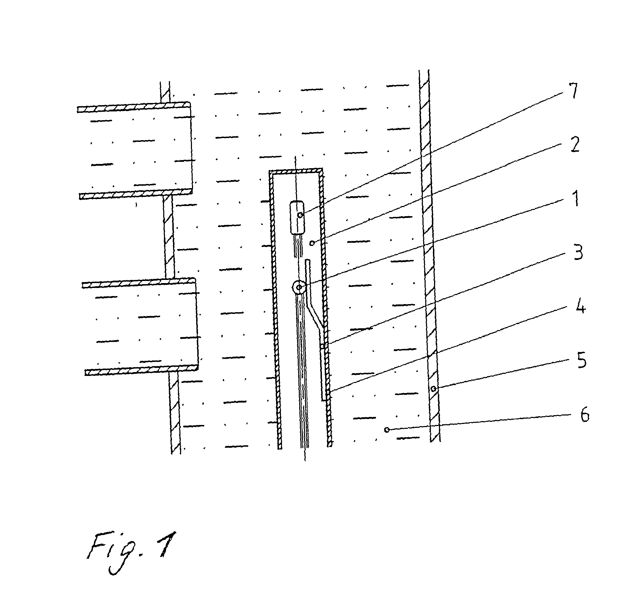

Fig. 1 eine Teilansicht eines Heizkörpers mit Heizelement in Schnittdarstellung.

Zur Temperaturerfassung im Heizstab 2 dient ein als NTC-Element ausgebildeter Temperaturfühler 1 im Inneren des Heizstabes. Das NTC-Element 1 ist unmittelbar an einer wärmeleitfähigen Brücke 3 positioniert, die mit der Hülle 4 des Heizstabes 2 formschlüssig und somit optimal wärmeleitend verbunden ist. Abhängig von dem den Heizstab umgebenden und somit im Heizkörper 5 vorhandenen Heizmedium 6 ergibt sich während einer definierten Zeitspanne - beginnend beim Einschalten des Heistabes 2 - am NTC-Element 1 eine Zeit-Temperatur-Funktion charakteristischen Verlaufs.

Umgibt den Heizstab 2 Wasser oder ein anderes beliebiges Heizmedium 6 kann die erzeugte Wärme an die Umgebung abgeführt werden. Mit entsprechender zeitlicher Verzögerung gibt das NTC-Element 1 die Temperatur des Heizmediums 6 wieder.

Ist der Heizkörper nicht befüllt und umgibt den Heizstab 2 somit Luft (nicht dargestellt) und die erzeugte Wärme kann nur in geringem Maß an die Umgebung abgeführt werden, staut sich die erzeugte Wärme im Heizstab 2. Bevor am NTC-Element 1ein merklicher Temperaturanstieg registriert werden und die Heizstabregelung (nicht dargestellt) reagieren könnte, würde die Schmelzsicherung 7 auslösen. Verhindert wird dies durch die wärmeleitfähige Brücke 3, die den raschen Temperaturanstieg unmittelbar an das NTC-Element 1 weitergibt.

Der am Temperaturfühler (1) ermittelte Zeit-Temperatur-Verlauf wird seitens der Heizelementregelung mit hinterlegten, typischen Verläufen für befüllte und nicht befüllte Heizkörper verglichen.

Ein Abgleich der gemessenen Temperaturen zu definierten Zeitpunkten mit den charakteristischen Werten, die sich einstellen, wenn den Heizstab 2 die Medien Luft bzw. Wasser/Wärmeträgerflüssigkeit 6 umgeben, lässt den Schluss auf den Füllzustand des Heizkörpers 5 zu. Bei der Feststellung "Radiator ist nicht befüllt" wird die Stromzufuhr frühzeitig unterbrochen und ein Zerstören des Heizstabes 2 bzw. seiner Komponenten durch Überhitzen wird verhindert. Der Heizvorgang wird unterbrochen, wenn das Ergebnis des Abgleichs auf einen nicht oder unzureichend befüllten Heizkörper schließen lässt.

Die wärmeleitfähige Brücke 3 ist so positioniert und dimensioniert, dass im befüllten Zustand die Temperatur des Heizmediums 6 ausreichend genau wiedergegeben wird und nicht durch die im Heizstab 2 herrschende, ggf. wesentlich höhere Temperatur verfälscht wird.

## Patentansprüche

1. Elektrisches Heizelement, insbesondere zum Aufheizen eines flüssigen Heizmediums (6) in einem Heizkörper (5), mit einem Heizstab (4), mindestens einem Temperaturfühler (1) und einer Sicherung (7), **dadurch gekennzeichnet, dass** als Temperaturfühler (1) ein NTC-Element vorgesehen ist, welches über eine mit der Innenseitenfläche des Heizstabes (4) verbunde wärmeleitende Brücke (3) eine vom Füllzustand des Heizkörpers (5) abhängige Temperaturveränderung erfährt.

2. Elektrisches Heizelement nach Anspruch 1, **dadurch gekennzeichnet, dass** der Temperaturfühler (1) mit der wärmeleitenden Brücke (3) formschlüssig mit der Innenseitenfläche des Heizstabes (4) verbunden ist.

3. Elektrisches Heizelement nach den Ansprüchen 1 und 2, **dadurch gekennzeichnet, dass** die Sicherung (7) eine Schmelzsicherung ist.

4. Elektrisches Heizelement nach den Ansprüchen 1 und 2, **dadurch gekennzeichnet, dass** die wärmeleitende Brücke (3) aus Kupfer besteht.
